# EUROPÄISCHE PATENTSCHRIFT

(11) **EP 3 647 097 B1**
(45) Veröffentlichungstag und Bekanntmachung des Hinweises auf die Patenterteilung: **30.04.2025**
(21) Anmeldenummer: 19190607.2
(22) Anmeldetag: 07.08.2019
(51) Int. Cl.: B60K 1/00, B60K 17/08, B60K 17/12, B60K 17/346, B60K 26/02

(54) **MOTORFAHRZEUGANTRIEB**
MOTOR VEHICLE DRIVE
ENTRAINEMENT DE VÉHICULE À MOTEUR

(30) Priorität: 07.08.2018 CH 9632018
(43) Veröffentlichungstag der Anmeldung: 06.05.2020
(73) Patentinhaber: Viktor Meili AG, 8862 Schübelbach (CH)
(72) Erfinder: MEILI, Manuel, 8862 Schübelbach (CH)
(74) Vertreter: Luchs, Willi

(56) Entgegenhaltungen:
- WO-A1-98/37614
- CH-A5- 684 789
- DE-A1- 102016 205 150
- DE-U1- 202014 001 318
- US-A1- 2010 262 347

## Beschreibung

Die Erfindung betrifft einen Motorfahrzeugantrieb, für den Allradantrieb eines Motorfahrzeugs, vorzugsweise eines Kleinlastfahrzeugs, mit einem Antriebsmotor und einer Getriebeeinheit, die eine mit dem Antriebsmotor koppelbar Antriebswelle, mehrere Übersetzungsstufen und ein Längsdifferentialgetriebe mit einer Abtriebswelle umfasst.

Fahrzeuge dieser Art werden mehrheitlich im kommunalen Bereich innerorts eingesetzt, wo sie kürzere Distanzen mit Fahrgeschwindigkeiten von maximal 45 bis 60 km/h zurücklegen. Sie sind primär als Kleinlastfahrzeuge konstruiert und sie eignen sich zum Ausführen von Spezialarbeiten, wie zum Beispiel zum Reinigen, Transportieren, Schneeräumen und ähnlichem. Sie sind entsprechend mit wegnehmbaren Spezialgeräten ausrüstbar. Das alles erfordert eine möglichst kompakte Dimensionierung des Fahrzeugs zwecks einer grösseren Manövrierfähigkeit desselben beim Ausführen der zu verrichtenden Arbeiten.

Ein Antrieb für Kleinlastfahrzeuge dieser Art ist in der CH 684 789 A5 geoffenbart. Der dort beschriebene Antrieb besteht aus einem Dieselmotor mit Einspritzpumpe, einer hydraulischen Verstellpumpe und einem hydraulischen Motor, der die Antriebsräder des Fahrzeugs über eine Getriebeeinheit antreiben kann. Es versteht sich von selbst, dass ein solcher Antrieb viel Platz in Anspruch nimmt und damit dem Ziel einer kompakten Dimensionierung des Fahrzeugs entgegensteht.

In der Druckschrift DE-10 2016 205 150 ist ein Triebstrang für ein Kraftfahrzeug offenbart, welcher mit einem Getriebe versehen ist, das ein Getriebegehäuse und wenigstens zwei miteinander koppelbare Wellen für den Antrieb aufweist. Zudem ist diesem eine Kupplung mit einer Kupplungswelle zugeordnet, die einerseits mit einer Antriebswelle eines Antriebsmotors und andererseits mit der ersten Welle des Getriebes koppelbar ist, wobei die Kupplungswelle und die erste Welle zumindest an der Übertragungsstelle nebeneinander angeordnet sind und in einem Winkel zueinander verlaufen. Damit ist zwar eine kompakte Bauweise des Triebstranges ermöglicht, was sich aber nicht eignet insbesondere für Kleinlastfahrzeuge, bei denen eine robuste Getriebeeinheit gefordert ist, damit auch beim Bestücken von wegnehmbaren Spezialgeräten, wie Schneepflüge, Schneefräsen etc. dauerhaft die nötige Kraft auch bei Spitzenbelastungen sichergestellt ist.

Die Druckschrift WO 98/37614 ist auf ein Antriebssystem für elektrische Fahrzeuge bezogen, bei dem ein Zweirotor-Elektromotor mit einem Aussenrotor und einem Innenrotor eine erste Antriebsachse und eine zweite Antriebsachse antreibt. Das Drehmoment und die Rotation werden zwischen dem Aussenrotor und der ersten Antriebsachse via eine Kupplung und einer ersten Antriebswelle bzw. zwischen dem Innenrotor und der zweiten Antriebsachse durch eine zweite Antriebswelle übertragen. Es ist ein Beschleunigungspedal und ein Steuerschalter vorgesehen, durch welche Signale zum Dual-Rotor Motor Regler gesendet werden. Eine Elektronik überwacht die Geschwindigkeiten der Achsen und steuert entsprechende Ventile.

In der Druckschrift US-2010/0262347 bei einem offenbarten Fahrzeug ist auf eine Parkbremse hingewiesen, welche bei der rückseitigen Antriebswelle zwischen dem Motor und dem Differential bei den Antriebsachsen für die Räder integriert ist.

Der Erfindung liegt die Aufgabe zugrunde, ein Motorfahrzeugantrieb der eingangs genannten Art zu schaffen, der sehr einfach aufgebaut ist, einen hohen Wirkungsgrad aufweist und mit diesem ein Allradantrieb ermöglicht wird.

Diese Aufgabe wird durch einen Motorfahrzeugantrieb, für den Allradantrieb eines Motorfahrzeugs, vorzugsweise eines Kleinlastfahrzeugs, mit einem Antriebsmotor als Elektromotor und einer in einem Gehäuse eingebauten Getriebeeinheit, die eine mit dem Antriebsmotor koppelbare Antriebswelle, mehrere Übersetzungsstufen und ein Längsdifferentialgetriebe mit einer Abtriebswelle umfasst, wobei der Antriebsmotor als Elektromotor zwischen den Radachsen angeordnet und über eine Steuerungseinrichtung durch ein manuell verstellbares Betätigungspedal zur Änderung seiner Drehgeschwindigkeit vom Fahrer ansteuerbar ist, wobei sich die Getriebeeinheit aus den zwei übereinanderliegenden Übersetzungsstufen mit je einem auf einer Welle sitzenden Zahnradpaar zusammensetzt, wobei die Welle der ersten Übersetzungsstufe durch ein auf der Antriebswelle des Elektromotors sitzenden Zahnrad, das in das eine Zahnrad der ersten Übersetzungsstufe eingreift, antreibbar ist, wobei in dem Gehäuse die Antriebswelle für die Kopplung mit dem Elektromotor und die Wellen der beiden Übersetzungsstufen parallel zueinander gelagert sind, wobei das Längsdifferentialgetriebe im Gehäuse unterhalb der zweiten Übersetzungsstufe platziert ist, dessen Abtriebswelle parallel zu den Wellen der Übersetzungsstufen verläuft.

Daraus ergibt sich eine kompakte Bauweise des Antriebs, weil dieser mit dem Elektromotor viel weniger Platz in Anspruch nimmt als die bisher bekannten Antriebe mit Diesel- und/oder hydraulischen Motoren. Ausserdem beansprucht er keinen zusätzlichen Raum quer zur Fahrtrichtung des Fahrzeugs. Das ist von Vorteil für eine günstige Positionierung der Getriebe-Abtriebswelle des Fahrzeugs. Darüber hinaus ist die Wartung und Instandhaltung des Elektromotors wesentliche leichter als bei Diesel- und/oder hydraulischen Motoren. Hinzu kommen auch die bekannten umweltfreundlichen Vorteile von Elektromotoren, die überdies sehr geräuscharm sind.

Zur kompakten Bauweise trägt auch bei, dass im Gehäuse der Getriebeeinheit unterhalb der zweiten Übersetzungsstufe der Längsdifferentialgetriebe platziert ist, dessen Abtriebswelle parallel zu den Wellen der Übersetzungsstufen ausgerichtet ist und vorteilhaft an beiden Ende mit je einer Kardangelenkwelle zum Antreiben von auf den Radachsen sitzenden Umlenkrädern verbunden ist, wobei beide Kardangelenkwellen relativ zum Längsdifferentialgetriebe annähernd symmetrisch zueinander streckend verlaufen. Zur sicheren Stilllegung des Fahrzeugs ist es zweckmässig, die Abtriebswelle des Längsdifferentialgetriebes mit einer ausserhalb des Gehäuses liegenden Differentialsperre zu versehen.

Die Erfindung wird nachfolgend anhand eines Ausführungsbeispiels unter Bezugnahme auf die Zeichnung näher erläutert. Es zeigen:
- Fig. 1: ein Prinzipschema eines Motorfahrzeugantriebs mit einem erfindungsgemässen Antriebsmotor und einer mit diesem gekoppelten Getriebeeinheit; und
- Fig. 2: einen Längsschnitt durch die Getriebeeinheit nach Fig. 1.

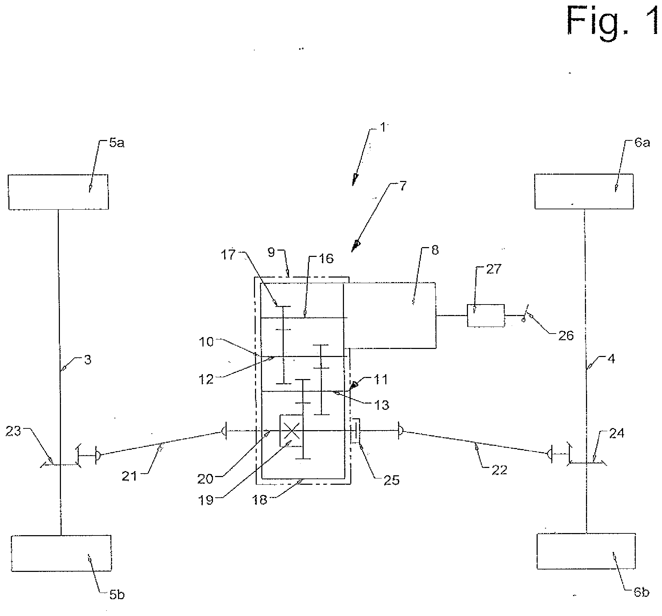

Das in Fig. 1 gezeigte Schema eines Kleinlastfahrzeugs 1 ist hauptsächlich für den Einsatz im kommunalen Bereich ausgelegt, wo das Fahrzeug in der Regel kürzere Distanzen mit Fahrgeschwindigkeiten von maximal 45 bis 60 km/h zurücklegt. Das Fahrzeug kann sowohl als Kleinlaster als auch als Spezialfahrzeug zum Ausführen von Reinigungs-, Schneeräumungs- und ähnlichen Spezialarbeiten eingesetzt werden. Hierfür ist es mit entsprechenden Spezialgeräten ausrüstbar, wie beispielsweise mit einer wegnehmbaren Schneeräumungsmaschine an seiner Frontseite bzw. eine Salzstreuvorrichtung oder eine Wasserpumpe heckseitig, was nicht näher dargestellt ist.

Das Kleinlastfahrzeug 1 hat zwei Radachsen 3, 4 mit Rädern 5a, 5b bzw. 6a, 6b, die mit einem Allradantrieb 7 bestehend aus einem Antriebsmotor 8 und einer Getriebeeinheit 9 antreibbar sind.

Als Antriebsmotor dient erfindungsgemäss ein Elektromotor 8, der in Fahrtrichtung gesehen direkt neben der Getriebeeinheit 9 zwischen den Radachsen 3, 4 angeordnet und platziert ist. Dieser Elektromotor 8 ist über eine Steuerungseinrichtung 27 durch ein manuell verstellbares Betätigungspedal 26 zur Änderung seiner Drehgeschwindigkeit vom Fahrer ansteuerbar ist.

Durch diese Anordnung beansprucht er keinen zusätzlichen Raum quer zur Fahrtrichtung des Fahrzeugs. Das ist von Vorteil in Hinblick auf die Positionierung der Abtriebswelle des Antriebs relativ zur mittleren Längsebene. Er ist damit auch leicht ein- und ausbaubar und leicht zugänglich im Hinblick auf etwaige Wartungs- und Instandhaltungsarbeiten am Fahrzeug.

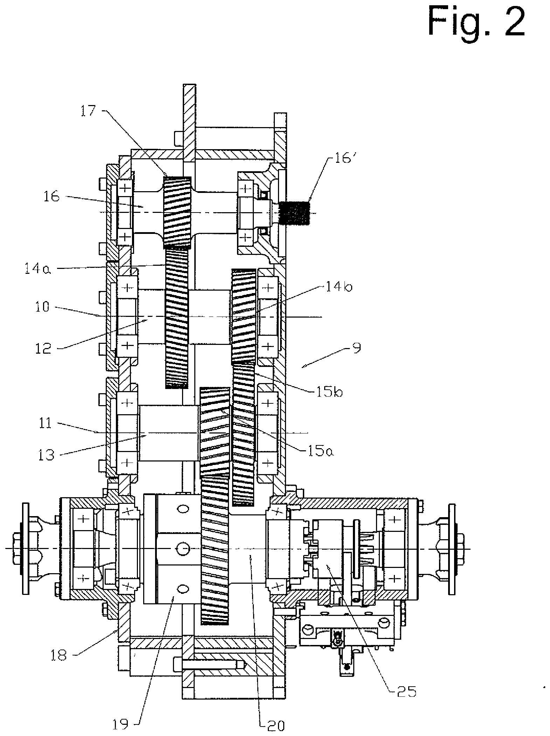

Wie insbesondere aus Fig. 2 ersichtlich, ist die Getriebeeinheit 9 ihrerseits als Übersetzungsgetriebe konstruiert, welches einfach mit unterschiedlichen Übersetzungen versehen werden kann. Sie besteht aus zwei übereinanderliegenden Übersetzungsstufen 10, 11 mit je einem auf einer Welle 12 bzw. 13 sitzenden Zahnradpaar 14a, 14b bzw. 15a, 15b , wobei die Welle 12 der ersten Übersetzungsstufe 10 durch ein auf der Antriebswelle 16 des Elektromotors 8 sitzendes Zahnrad 17, das in das eine Zahnrad 14a der ersten Übersetzungsstufe 10 eingreift, antreibbar ist. Die Getriebeeinheit 9 ist in einem Gehäuse 18 eingebaut, in dem die Antriebswelle 16 mit einer nach aussen vorstehenden Zapfwelle 16' für den Elektromotor 8 und die Wellen 12, 13 der beiden Übersetzungsstufen 10, 11 parallel zueinander gelagert sind.

Die Getriebeeinheit 7 enthält auch ein im Gehäuse 18 unterhalb der zweiten Übersetzungsstufe 11 angeordnetes Längsdifferentialgetriebe 19, dessen Abtriebswelle 20 im Gehäuse 18 parallel zu den Wellen 12, 13 der beiden Übersetzungsstufen gelagert ist und an beiden Enden mit je einer Kardangelenkwelle 21, 22 zum Antreiben von auf den Radachsen 3, 4 sitzenden Umlenkrädern 23 bzw. 24 verbunden ist.

Durch die Anordnung des Elektromotors 8 direkt neben der Getriebeeinheit 9 zwischen den Radachsen 3, 4 ist es möglich, beide Kardangelenkwellen 21, 22 relativ zum Längsdifferentialgetriebe 19 annähernd symmetrisch zueinander auszurichten. Das ermöglicht gegenüber dem Stand der Technik eine konstruktive Vereinfachung des Getriebes. Ausserhalb des Gehäuses 18 ist in der Abtriebswelle 20 eine Differentialsperre 25 zur sicheren Stilllegung des Fahrzeuges eingebaut. Zudem ist das Gehäuse 18 des Getriebes und damit auch der an ihm befestigte Elektromotor 8 geräusch- und vibrationsminimierend beispielsweise gummigelagert.

Die Verwendung eines Elektromotors 8 direkt neben der Getriebeeinheit 9 ermöglicht eine sehr kompakte Bauweise des Antriebs und bietet zudem die für Elektromotoren spezifischen Vorteile, sowohl hinsichtlich der Steuerung, Wartung und Instandhaltung des Motors als auch der immer wichtigeren umweltbezogenen Anforderungen. Das einfach konstruierte Getriebe eignet sich somit besonders gut für die Ausführung der mit dem Fahrzeug zu verrichtenden Arbeiten.

## Patentansprüche

1. Motorfahrzeugantrieb, für den Allradantrieb eines Motorfahrzeugs, vorzugsweise eines Kleinlastfahrzeugs, mit einem Antriebsmotor als Elektromotor (8) und einer in einem Gehäuse (18) eingebauten Getriebeeinheit (9), die eine mit dem Antriebsmotor koppelbare Antriebswelle (16), mehrere Übersetzungsstufen (10, 11) und ein Längsdifferentialgetriebe (19) mit einer Abtriebswelle (20) umfasst, wobei der Antriebsmotor als Elektromotor (8) zwischen den Radachsen (3, 4) angeordnet und über eine Steuerungseinrichtung (27) durch ein manuell verstellbares Betätigungspedal (26) zur Änderung seiner Drehgeschwindigkeit vom Fahrer ansteuerbar ist, wobei sich die Getriebeeinheit (9) aus den zwei übereinanderliegenden Übersetzungsstufen (10, 11) mit je einem auf einer Welle (12 bzw. 13) sitzenden Zahnradpaar (14a, 14b; 15a, 15b) zusammensetzt, wobei die Welle (12) der ersten Übersetzungsstufe durch ein auf der Antriebswelle (16) des Elektromotors sitzenden Zahnrad (17), das in das eine Zahnrad (14a) der ersten Übersetzungsstufe (10) eingreift, antreibbar ist, wobei in dem Gehäuse (18) die Antriebswelle (16) für die Kopplung mit dem Elektromotor (8) und die Wellen (12, 13) der beiden Übersetzungsstufen (10, 11) parallel zueinander gelagert sind, wobei das Längsdifferentialgetriebe (19) im Gehäuse (18) unterhalb der zweiten Übersetzungsstufe (11) platziert ist, dessen Abtriebswelle (20) parallel zu den Wellen (12, 13) der Übersetzungsstufen (10, 11) verläuft.

2. Motorfahrzeugantrieb nach Anspruch 1, **dadurch gekennzeichnet, dass**
die Abtriebswelle (20) des Längsdifferentialgetriebes (19) mit einer ausserhalb des Gehäuses (18) liegenden Differentialsperre (25) versehen ist.

3. Motorfahrzeugantrieb nach Anspruch 1 oder 2, **dadurch gekennzeichnet, dass**
die Abtriebswelle (20) an beiden Enden mit je einer Kardangelenkwelle (21, 22) zum Antreiben von auf den Radachsen (3, 4) sitzenden Umlenkrädern (23, 24) verbunden ist, wobei beide Kardangelenkwellen (21, 22) relativ zum Längsdifferentialgetriebe annähernd symmetrisch sich zueinander erstreckend ausgerichtet sind.

## Claims

1. Motor vehicle drive for the all-wheel drive of a motor vehicle, preferably a small truck, with a drive motor as an electric motor (8) and a transmission unit (9) installed in a housing (18), which comprises a drive shaft (16), that can be coupled to the drive motor, a plurality of gear ratios (10, 11), and a longitudinal differential gear (19) with an output shaft (20), **characterized in that**
the drive motor as an electric motor (8) is arranged between the wheel axles (3, 4) and can be controlled by the driver via a control device (27) using a manually adjustable actuating pedal (26) to change its rotational speed, wherein the transmission unit (9) is composed of the two superimposed gear ratios (10, 11), each with a gear pair (14a, 14b; 15a, 15b) mounted on a shaft (12 or 13), wherein the shaft (12) of the first gear ratio is driven by a gear (17) mounted on the drive shaft (16) of the electric motor, which gear engages with the one gear (14a) of the first gear ratio (10), wherein the drive shaft (16) for coupling to the electric motor (8) and the shafts (12, 13) of the both gear ratios (10, 11) are mounted parallel to one another in the housing (18), wherein the longitudinal differential gear (19) is placed in the housing (18) below the second gear ratio (11), the output shaft (20) of which extends parallel to the shafts (12, 13) of the gear ratios (10, 11).

2. Motor vehicle drive according to claim 1, **characterized in that**
the output shaft (20) of the longitudinal differential gear (19) is provided with a differential lock (25) located outside the housing (18).

3. Motor vehicle drive according to claim 1 or 2, **characterized in that**
the output shaft (20) is connected at both ends to a cardan joint shaft (21, 22) for driving deflection wheels (23, 24) mounted on the wheel axles (3, 4), wherein both cardan joint shafts (21, 22) are aligned approximately symmetrically relative to the longitudinal differential gear.

## Revendications

1. Entraînement de véhicule à moteur pour un entraînement de toutes les roues d'un véhicule à moteur, de préférence d'une camionnette, comprenant un moteur d'entraînement comme moteur (8) électrique et une unité (9) de transmission, qui est mise dans un carter (18) et qui comprend un arbre (16) d'entraînement pouvant être accouplé au moteur d'entraînement, plusieurs étages (10, 11) de multiplication et un engrenage (19) différentiel longitudinal ayant un arbre (20) de sortie, dans lequel le moteur d'entraînement est monté comme moteur (8) électrique entre les essieux (3, 4) et peut, en passant par un dispositif (27) de commande, être commandé par une pédale (26) d'actionnement réglable manuellement pour la modification de sa vitesse de rotation par le conducteur, dans lequel l'unité (9) de transmission est composée des deux étages (10, 11) de multiplication superposés ayant chacun une paire (14a, 14b ; 15a, 15b) de roues dentée assises sur un arbre (12 et 13), dans lequel l'arbre (12) du premier étage de transmission peut être entraîné par une roue (17) dentée, qui est assise sur l'arbre (16) d'entraînement du moteur électrique et qui engrène dans une roue (14a) dentée du premier étage (10) de transmission, dans lequel dans le carter (18) l'arbre (16) d'entraînement pour l'accouplement au moteur (8) électrique et les arbres (12, 13) des deux étages (10, 11) de transmission sont montés en étant parallèles les uns aux autres, dans lequel l'engrenage (19) différentiel longitudinal est placé dans le carter (18) en-dessous du deuxième étage (11) de transmission, son arbre (20) de sortie s'étendant parallèlement aux arbres (12, 13) des étages (10, 11) de transmission.

2. Entraînement de véhicule à moteur suivant la revendication 1, **caractérisé en ce que**
l'arbre (20) de sortie de l'engrenage (19) différentiel longitudinal est pourvu d'un blocage (25) de différentiel se trouvant à l'extérieur du carter (18).

3. Entraînement de véhicule à moteur suivant la revendication 1 ou 2, **caractérisé en ce que**
l'arbre (20) de sortie est assemblé aux deux bouts à respectivement un arbre (21, 22) d'articulation à la cardan pour l'entraînement de roues (23, 24) de renvoi assises sur les essieux (3, 4), dans lequel les deux arbres (21, 22) d'articulation à la cardan sont orientés en s'étendant à peu près symétriquement l'un par rapport à l'autre relativement à l'engrenage différentiel longitudinal.
